# EUROPÄISCHE PATENTSCHRIFT

(11) **EP 1 232 668 B1**
(45) Veröffentlichungstag und Bekanntmachung des Hinweises auf die Patenterteilung: **29.04.2009**
(21) Anmeldenummer: 01978422.2
(22) Anmeldetag: 16.10.2001
(51) Int. Cl.: H04W 8/20

(54) **ROAMINGVERFAHREN BEI TELEMATIKDIENSTEN**
ROAMING METHODS FOR TELEMATIC SERVICES
PROCEDES D'ITINERANCE POUR DES SERVICES DE TELEMATIQUE

(30) Priorität: 27.10.2000 DE 10053493
(43) Veröffentlichungstag der Anmeldung: 21.08.2002
(73) Patentinhaber: ATX Europe GmbH, 40549 Düsseldorf (DE)
(72) Erfinder: SROCZYNSKI, Andrea, 47269 Duisburg (DE); PTASZYK, Ursula, 44627 Herne (DE); WICHURA, Torsten, 40547 Düsseldorf (DE); ASSHAUER, Bernhard, 1130 Wien (AT)
(74) Vertreter: Weisse, Renate
(86) Internationale Anmeldenummer: PCT/EP2001/011941
(87) Internationale Veröffentlichungsnummer: WO 2002/035876

(56) Entgegenhaltungen:
- WO-A-97/42781
- DE-A- 19 816 575
- US-A- 6 047 327
- US-A- 6 128 489
- US-A- 6 128 489
- S. VIEWEG: "Neuer Standard für Verkehrstelematik" FUNKSCHAU, [Online] September 1998 (1998-09), Seiten 44-46, XP002186819 Gefunden im Internet: <URL:www.funkschau-handel.de/heftarchiv/pd f/1998/fs09/fs9809044.pdf> [gefunden am 2002-01-08]
- PATENT ABSTRACTS OF JAPAN vol. 1999, no. 09, 30. Juli 1999 (1999-07-30) & JP 11 098568 A (FUJITSU LTD), 9. April 1999 (1999-04-09)

## Beschreibung

### Technisches Gebiet

Roamingverfahren zum Ermitteln von lokalen Datendiensten mit einem Funkendgerät, wie ein Mobilfunktelefon, in einem Funknetz, wobei nach der Initialisierung des Funkendgerätes eine Heimattabelle übermittelt wird, in der Adreß-, Parameter- und Zugriffsinformationen zum Erreichen von lokalen Datendiensten enthalten sind, welche durch das Funkendgerät gespeichert werden, wobei eine als Zugriffstabelle ausgebildete Gasttabelle übermittelt wird, in der Adreß-, Parameter- und Zugriffsinformationen zum Erreichen von lokalen Datendiensten enthalten sind, welche durch das Funkendgerät gespeichert wird.

### Stand der Technik

Über Mobilfunktelefone, auch "Handys" genannt, sowie Navigationssysteme in Autos werden u.a. Informationsdienstleistungen angeboten. Diese Information kann beispielsweise eine Verkehrsstaumeldung sein. Andere Informationsdienstleistungen sind z.B. Routenplaner, der nächst gelegene Pannendienst, Hotelführer, Kulturangebote und Sehenswürdigkeiten. Die Liste der möglichen Informationsdienstleistungen ist praktisch unbegrenzt. Diese Informationsdienstleistungen werden als Telematik bezeichnet. Telematik ist ein Kunstwort aus Telekommunikation und Informatik, was so viel bedeutet, wie computergestützte Telefondienstleistungen. Die Anbieter von solchen Informationsdienstleistern werden als Telematikbetreiber bezeichnet, die bestimmte angeforderte Daten übermitteln.

Die Informationsdienstleistungen werden von einem Telematikbetreiber über SMS (engl. Short Messages Service - Kurznachrichtendienst) auf Anforderung an ein Endgerät, wie das Handy, versandt. Der Kurznachrichtendienst (SMS) im sogenannten GSM-Standard (Global System for Mobile Communication - engl. "globales System für mobile Kommunikation") erlaubt es, an Mobilfunkteilnehmern kurze Nachrichten zu versenden. Mit dem SMS-Dienst lassen sich beispielsweise Mitteilungen von einem E-Mail-System zu einem Handy oder Navigationssystem austauschen. Die Übertragung erfolgt digital über leitungsvermittelte Wählverbindungen oder bei GSM über den paketvermittelten Kontrollkanal. Die Übertragungsgeschwindigkeit liegt zwischen 400 und 500 bit/s.

Das freie Bewegen - engl. "Roaming" - in Funknetzen, insbesondere von verschiedenen Anbietern, wird in Europa in dem besagten GSM-Standard vereinbart. Damit ein mobiles Endgerät innerhalb eines Mobilfunksystems von Funkzelle zu Funkzelle wandern kann, ohne Unterbrechung der Mobilfunkkommunikation, muß zwischen den Funkzellen ein spezielles Übergabeverfahren eingeführt werden. Dieses wird grundsätzlich "Roaming" genannt. Der Teilnehmer kann sich im gesamten Versorgungsbereich eines Mobilfunknetzes bewegen, ohne seine Kommunikation einschränken zu müssen. Auch wenn der Bereich, in dem sich der Teilnehmer befindet, nicht durch seinen Betreiber versorgt wird, kann er ohne Einschränkungen das Netz benutzen. Das Roaming kann auch grenzüberschreitend erfolgen, nämlich dann, wenn der Betreiber im Ausland ein entsprechendes Abrechnungsabkommen mit dem nationalen Betreiber hat.

Mit der Normierung eines europäischen Funktelefonsystems im 900-MHz-Bereich verfolgte die CEPT (Conférence Européenne des Administrations des Postes et Telecommunications) das Ziel eines europaweiten kompatiblen Mobilfunkdienstes. Die Arbeitsgruppe, die die Standardisierung vorantrieb, heißt GSM. Die Standardisierungsarbeiten unter der GSM konzentrierten sich auf eine digitale Datenübertragung, aus der sich die GSM-Architektur gebildet hat. Die GSM-Technik basiert auf einer digitalen Übertragung. Als Dienste bietet GSM eine Reihe von Basisdiensten und Zusatzdiensten, wie eben das "SMS", an.

In Kombination mit GPS (Abkürzung von engl. "Global Positioning System") werden diese Telematiksysteme auch als Verkehrsleit- oder Navigationssysteme benutzt. GPS ist ein weltumspannendes Satellitensystem zur hochgenauen Ortung, Navigation und Zeitverteilung. Werden vom GPS-Empfänger gleichzeitig mindestens 3 GPS-Satelliten empfangen, kann der Empfänger aus der Laufzeit der Signale seine Position auf ca. 20 m bis 100 m genau ermitteln. Unter Ausnutzung des Dopplereffekts an bewegten Fahrzeugen läßt sich die Geschwindigkeit, der Kurs und andere navigatorischen Größen ermitteln.

Zur europaweiten Nutzung von Telematikdiensten in mobilen Endgeräten, basierend auf GATS (Abkürzung für engl. "Global Automotive Telematics Standard"), stehen weiterhin derzeit die in der Spezifikation dieses Standards "Dienstspezifikation Interne Dienste V2.0" beschriebenen Verfahren zur Verfügung. Hierbei werden u.a. die in "ADP Internal Services V2.0" beschriebenen Protokolle zur Datenübermittlung verwendet. ADP ist die Abkürzung für engl. "Application Data Protocol". Die hier beschriebenen Protokolle standardisieren den Datenaustausch zwischen den einzelnen Telematikbetreibern.

Um sich in einem Funknetz bzw. bei seinem Telematikbetreiber zu identifizieren, benötigt ein Nutzer derzeit eine sogenannte SIM-Karte (Abkürzung für engl.: Subscriber Identity Module). Die SIM-Karte ist eine scheckkartengroße Identifizierungskarte für den Teilnehmer eines GSM-Mobilfunkdienstes und wird im allgemeinen als "Chipkarte" oder "Smart Card" bezeichnet. Diese Karten gibt es für Autotelefone und in verkleinerter Version auch für Handys. Bedingt durch die ständige Verkleinerung der Handys gibt es Handy-Ausführungen, bei denen nur noch der Chip der SIM-Karte benutzt wird. Er kann zu diesem Zweck von der SIM-Karte entfernt und in das Handy eingebaut werden. Die SIM-Karte bzw. dessen Chip enthält teilnehmerrelevante Daten und Algorithmen sowie die Zugangsberechtigung zum Netz. U.a. befinden sich auf der SIM-Karte die internationale Teilnehmernummer, die internationale Identifikationsnummer für das Mobilgerät, die persönliche Identifikationsnummr (PIN) oder der Authentisierungsschlüssel und einige weitere Daten. Mit der SIM-Karte für das GSM-Netz identifiziert sich der Teilnehmer mit seiner Funktelefon-Rufnummer. Mit Hilfe der Authentifikation stellt das Netz sicher, daß es sich tatsächlich um einen autorisierten GSM-Teilnehmer handelt. Das Authentifikationsverfahren wird parallel auf der SIM-Karte und im Netz durchgeführt und im Ergebnis verglichen. Bei Ergebnisgleichheit ist die Teilnehmerauthentität gewährleistet. Nach der Einbuchungsprozedur kann der Teilnehmer mit jedem beliebigen GSM-Telefon innerhalb des Versorgungsbereiches seines Betreibers Telefonate führen. Darüber hinaus ist der Teilnehmer unter seiner persönlichen Rufnummer im In- und Ausland erreichbar. Die SIM-Karte ist quasi der Schlüssel auch zur Nutzung der Telefon- und Telematikdienste.

Nach diesem GATS-Standard werden die Endgeräte beim Einschalten zunächst initialisiert und der Benutzer mit Hilfe der SIM-Karte identifiziert. Anschließend übermittelt der Telematikbetreiber in Form von SMS eine erste Tabelle, in der Informationen über das Heimatnetz enthalten sind. Die Information des sogenannten Heimattabellensatzes besteht aus Adreß-, Parameter- sowie erforderliche Zugriffsdaten, die dem Heimatnetz zugeordnet sind. Weiterhin wird nach diesem GATS-Standard eine Gasttabelle mit Adressen von Telematikanbietern in entsprechenden Gastländern übertragen. Diese Tabellen werden im Endgerät gespeichert.

Weiterhin werden nach dem GATS-Standard die DES-Schlüssel sowie Nachbarlandtabellen abgespeichert. Bei dem DES-Schlüssel handelt es sich um einen Standard für die Datenverschlüsselung. Die Nachbarlandtabellen enthalten spezifische Informationen über die Nachbarländer (Ländercode) bzw. über deren Netze (Netzcode), die notwendig sind, um sich in die Funknetze dieser Ländern einwählen zu können.

"Telematikroaming" bedeutet, daß ein Endgerät sich auch außerhalb seines durch Erstinitialisierung festgelegten Heimatnetzes, dem Gastnetz, bewegen kann. Hierbei werden dem Endgerät lokalspezifische Informationsdienstleistungen angeboten; z.B.: Einem Nutzer der Telematikdienste würde der deutsche Pannendienst bei seinem Urlaub in Frankreich wenig helfen können. Er bräuchte einen französischen Pannendienst in seiner Nähe. Die Informationsdienstleistung der Telematikbetreiber muß also ständig an die individuellen lokalen Gegebenheiten angepaßt werden. Diese Anpassung ist beim reinen "GMS-Roaming" nicht möglich. Das Endgerät beim GSM-Roaming würde an die lokalen Gegebenheiten nicht angepaßt werden.

Nachteil bei den bekannten Verfahren zum Telematikroaming ist, daß die Funktion nicht mehr gewährleistet werden kann, wenn die Kontinuität beim Durchreisen von Ländern nicht mehr gegeben ist. Wird ein Endgerät, z.B. in Deutschland, genutzt, ausgeschaltet, anschließend außer Landes -beispielsweise nach Frankreich- transportiert, und dann wieder in Betrieb genommen, so ist die Nutzung der Telematikdienste nicht ohne weiteres möglich.

Auch ein Wechsel der SIM-Karte wird bei den vorhandenen GATS-Verfahren weder im Heimat- noch im Gastland berücksichtigt. Da insbesondere aufgrund von gesetzlichen Bestimmungen nicht immer eine Nutzung auf GSM-Roaming gewährleistet ist, versagt das GATS z.B. bei der Nutzung eines Endgerätes im Ausland mit SIM-Karten verschiedener Anbietet.

Um die Ursache hierfür zu verstehen, müssen folgende Überlegungen angestellt werden:
Beim Einschalten eines Endgerätes wird dieses zunächst initialisiert. Dazu verbindet sich das Endgerät mit dem Heimatnetz. Das Heimatnetz ist von den SIM-Karten abhängig, d.h. unterschiedliche Anbieter von Netzen haben auch unterschiedliche Netzstrukturen. Das Heimatnetz übermittelt dem Endgerät eine für die SIM-Karte spezifische Tabelle mit heimatbezogenen Daten, um Telematikdienste in Anspruch nehmen zu können. Diese Tabelle wird Heimattabelle genannt. Die Heimattabelle besteht wiederum aus drei Tabellen: Der Adreß- der Parameter- und Zugriffsdatentabelle. Diese Tabellen werden auch als Heimattabehensatz bezeichnet und werden in einem Speicher des Endgerätes abgespeichert.

Die Adreßdaten sind erforderlich, um den entsprechenden Anbieter von Telematikdiensten herauszufinden. Die Zugriffsdaten sind erforderlich, um den Zugriff auf die Daten dieser Adresse zu ermöglichen. In der Tabelle der Parameterdaten stehen Daten, wie z.B. Timing-Parameter oder Dienstprofile. Diese Daten sind alle sowohl karten- als auch netzspezifisch. Werden nun die Karten ausgetauscht, so passen die in dem Endgerät vorhandenen Daten nicht mehr mit der SIM-Karte zusammen.

Eine ähnliche Situation ergibt sich, wenn beim "Roaming" in ein benachbartes Land, also in ein anderes Netz, die Kontinuität unterbrochen wird, d.h., wenn das Endgerät ausgeschaltet wird, während es beispielsweise von einem Netzanbieter zum nächsten gelangt. Bei eingeschaltetem Endgerät werden die Datentabellen gemäß dem Roamingverfahren nach dem GATS-Standard ständig an die lokalen Gegebenheiten durch entsprechende lokale Telematikanbieter aktualisiert. Neben der Heimattabelle werden nämlich Gasttabellen bei der Initialisierung mit übermittelt, die bei jedem Netzwechsel angepaßt werden. In den Gasttabellen stehen Adreßdaten, welcher Telematikanbieter erreicht werden kann. Bei ausgeschaltetem Endgerät kann eine solche Anpassung nicht mehr erfolgen.

Dem Endgerät liegen dann nur Daten vor, mit denem er im anderen Netzt grundsätzlich nichts anfangen kann, wie es das Beispiel mit der Adresse des deutschen Pannendienstes in Frankreich zeigt.

Die US-Patentschrift US 604 7327 A benutzt bei Telekommunikationsgeräten einen Zeitstempel, um die Aktualität von Listen für Datendienste festzustellen. Dabei werden keine veränderbaren Nachbarlandtabellen übermittelt.

Die WO 97/42781 A1 beschreibt ein Roamingverfahren mit einem Telekommunikationsgerät zwischen verschiedenen Telekommunikationsnetzwerken. Dabei werden lokale Dienste mit dem Telekommunikationsgerät ermittelt. Nach der Initialisierung des Telekommunikationsgeräts werden für Dienste spezifische Daten zwischen Funknetz und Telekommunikationsgerät ausgetauscht. Diese spezifischen Daten enthalten Adreß-, Parameter- und Zugriffsinformationen zum Erreichen von lokalen Datendiensten. Diese spezifischen Daten werden durch das Telekommunikationsgerät gespeichert. Eine als Zugriffstabelle bezeichnete Gasttabelle wird beim Roaming an das Telekommunikationsgerät übermittelt. Diese Gasttabelle enthält Adreß-, Parameter- und Zugriffsinformationen zum Erreichen von lokalen Datendiensten. Diese Zugriffstabelle wird durch das Telekommunikationsgerät gespeichert.

Nachteil bei diesem Verfahren ist, dass nie sichergestellt werden kann, dass die Gasttabelle auch gültig bzw. aktuell ist. Es kann durchaus vorkommen, dass *der Netzanbieter in dem heimatnetzfremden Land und*/*oder dessen* angebotene Dienste nicht mehr vorhanden sind.

### Offenbarung der Erfindung

Aufgabe der Erfindung ist es daher, ein Verfahren für Funkendgeräte, wie Mobilfunktelefone, in einem Funknetz zu schaffen, das die Nachteile des Standes der Technik vermeidet. Insbesondere ist es Aufgabe der Erfindung, daß auch beim Ausschalten des Endgerätes und späteren Einschalten des Funkendgerätes beim "Roaming" lokale gültige bzw. aktuelle Telematikdienste übermittelt werden können. Zudem soll ein Austausch von SIM-Karten verschiedener Anbieter jederzeit möglich sein.

Erfindungsgemäß wird die Aufgabe dadurch gelöst, daß bei einem Verfahren zum Ermitteln von lokalen Datendiensten mit einem Funkendgerät in einem Funknetz der eingangs genannten Art, wobei eine als Zugriffstabelle ausgebildete Gasttabelle übermittelt wird, in der Adreß-, Parameter- und Zugriffsinformationen zum Erreichen von lokalen Datendiensten enthalten sind, welche durch das Funkendgerat in einem Tabellensatz gespeichert wird, ein Zeitstempel in der Zugriffstabelle *zur Prüfung, ob die im Tabellensatz enthaltenen Daten noch gültig sind*, enthalten ist und eine veränderbare Nachbarlandtabelle übermittelt und durch das Funkendgerät im Tabellensatz gespeichert wird, wobei bei einem Wechsel des Netzes ein Zeitstempel in der Zugriffstabelle für das neue Netz geprüft wird, ob die im Tabellensatz enthaltenen Daten noch gültig sind, wobei eine Konfigurationsanfrage nach Zugriffsdaten für das aktuelle Netz ausgelöst wird, wenn die Daten nicht mehr gültig sein.

Die Erfindung beruht auf dem Prinzip, daß nicht nur die Adressen in den Gasttabellen abgespeichert werden, sondern sämtliche Zugriffs- und Parameterdaten. Anhand des Zeitstempels kann die Aktualität der jeweiligen Zugriffstabellen überprüft werden. Hierdurch kann das Funkendgerät ausgeschaltet werden und in einem anderen Netz wieder eingeschaltet werden. Die zusätzliche Verwaltung der Parameter pro Netz macht deshalb Sinn, da es durchaus vorkommen kann, daß in Abhängigkeit des Netzes die Werte der Parameter geändert werden müssen. Die zusätzliche Verwaltung der Zugriffdaten dient dazu, auf entsprechende Dienstleister zugreifen zu können. Ein weiterer Vorteil ergibt sich bei dem erfindungsgemäßen Verfahren durch Übermittlung und Speicherung einer Nachbarlandtabelle. Hierdurch wird eine Kompatibilität zu älteren Endgeräten gewährleistet. Die Nachbarlandtabelle ist optional und stellt eine Empfehlungsliste dar. Als Gasttabellen werden alle Zugriffs,- Adreß- und Parametertabellen bezeichnen die nicht dem Heimatnetz zugeordnet sind. Alle drei Tabellen werden als Gasttabellensatz bezeichnet. Ein Funkendgerät sollte mindestens drei Gasttabellensätze vorsehen.

Der Auslöser für das Starten von Roamingabläufen ist der Wechsel des Netzes. Die folgenden Aktionen müssen nun im Endgerät ausgeführt werden, um entsprechende Telematikdienste zu erhalten:
- Es ist zu überprüfen, ob zum neuen Netz ein passender Tabellensatz (Gast oder Heimat) im Endgerät existiert.
- Ist dies der Fall, so ist zu prüfen, ob die dort enthaltenen Daten noch gültig sind. Dies geschieht über einen Zeitstempel in der Zugriffstabelle.
- Sind alle Daten noch gültig, so wird der weitere Dienstbetrieb über diese Tabelle abgewickelt.
- Sollten die Daten nicht mehr gültig sein, weil beispielsweise der Zeitstempel überschritten wurde, so ist eine Konfigurationsanfrage nach Zugriffsdaten für das aktuelle Netz auszulösen. Nach Empfang und Speicherung der Daten wird der weitere Dienstbetrieb über diese Tabelle abgewickelt.
- Sollte im Endgerät noch kein passender Tabellensatz existieren, dann ist eine Konfigurationsanfrage für alle Applikationen, Adreß-, Parameter- und Zugriffsdaten auszulösen. Nach Empfang und Speicherung der Daten wird der weitere Dienstebetrieb über diese Tabelle abgewickelt.
- Sollte in den empfangenen Zugriffsdaten auf DES-Schlüssel verwiesen werden, die noch nicht im Endgerät vorliegen, sind diese mittels eines nach einem entsprechenden Schlüssel beim Telematikbetreiber zu erfragen.

Der Benutzer sollte jede während des Roamingablaufs benötigte Konfigurationsaktualisierung bestätigen müssen, da Roamingkosten für ihn entstehen können. Als Alternative kann ein globaler Roaming-Ein-/Ausschalter im Endgerät vorhanden sein. Dann kann der Kunde nicht je Netz/Land entscheiden, ob er die Dienste per Telematikroaming nutzen möchte, sondern nur allgemein für alle Netze/Länder.

Sollte während des Roamingablaufs kein freier Gasttabellensatz mehr zur Verfügung stehen, so ist der Satz zu löschen, der am längsten nicht zur Dienstenutzung verwendet wurde und mit den neuen Daten zu überschreiben.

Es sollte versucht werden, möglichst aus solchen Netzen einen Roamingablauf zu starten, die auch in der Nachbarlandtabelle vorhanden sind. Sollte der Nutzer jedoch nicht einwilligen in ein solches Netz zu wechseln oder ein solches Netz nicht zur Verfügung stehen, kann der oben beschriebene Ablauf auch für andere Netze durchgeführt werden.

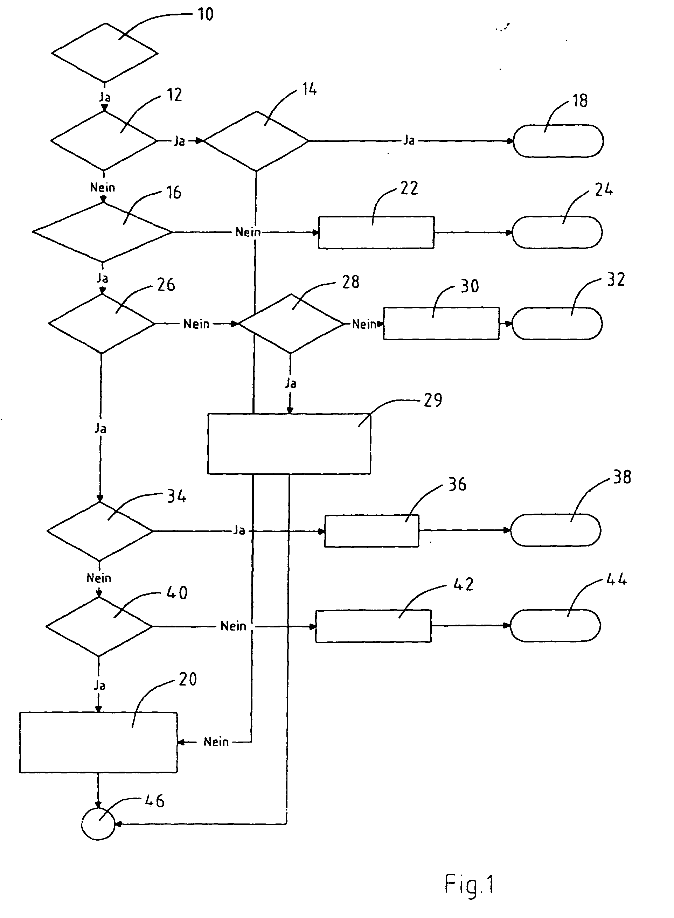

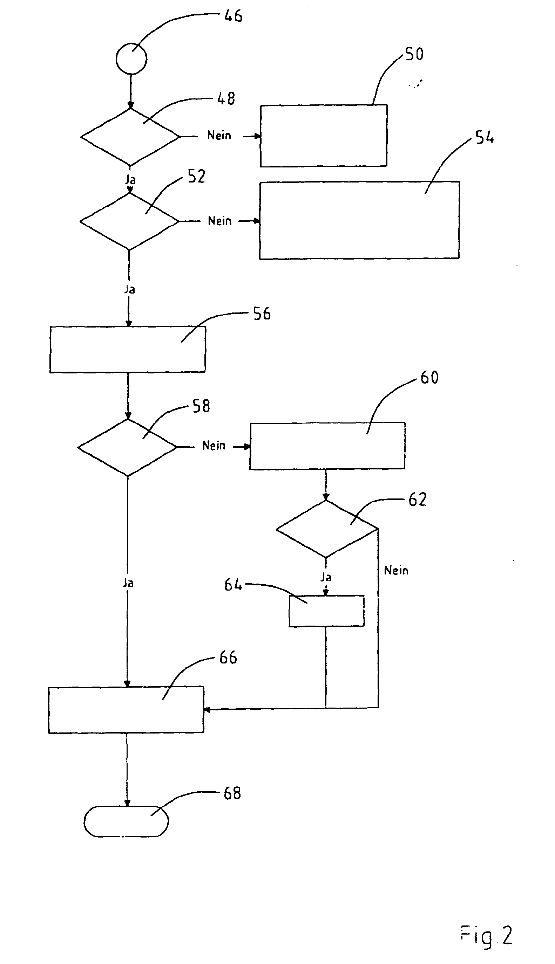

Ein Ablaufdiagramm mit dem detaillierten Roamingablauf (inklusive möglicher Fehler und Interaktionen mit einem Mobilfunktelefon) wird in den unten beschriebenen Fig. 1 und 2 dargestellt.

Als vorteilhafte Ausgestaltung der Erfindung hat sich weiterhin erwiesen, wenn auch ein Verschlüsselungsalgorithmus durch Heimat- oder Fremdnetze übermittelt wird, welcher durch das Funkendgerät gespeichert wird. Hierdurch können die zu empfangenen Daten decodiert und die gesendeten. Daten codiert werden, wodurch insbesondere individuelle Daten, die gesendet werden, vor unbefugtem Zugriff gesichert werden. Durch eine eigene Verwaltung des Verschlüsselungsalgorithmus können auch unterschiedliche Codierverfahren, je Netz, gewählt werden.

Weiterhin ergibt sich ein Vorteil, wenn bei einem erfindungsgemäßen Verfahren Initialisierungsadressen übermittelt und durch das Funkendgerät gespeichert werden. Mit Hilfe dieser gespeicherten Liste ist es möglich geworden, immer eine Adresse für die Kombination aus eingebuchtem Netz und dem Netz der SIM-Karte zu finden, ohne daß eine aufwendige Vorkonfiguration im Endgerät notwendig wird.

Weitere Vorteile ergeben sich aus dem Gegenstand der Unteransprüche.

### Kurze Beschreibung der Zeichnung

- Fig. 1: zeigt den ersten Teil eines Flußdiagramms eines detaillierten Roamingablaufs, in dem ein erfindungsgemäßes Verfahrens zum Einsatz kommt.
- Fig. 2: zeigt den zweiten Teil eines Flußdiagramms von Fig. 1

### Bevorzugtes Ausführungsbeispiel

Fig. 1 zeigt den ersten Teil eines Flußdiagramms, in dem ein erfindungsgemäßes Verfahren zum Einsatz kommt In Raute 10 wird die Abfrage des Endgerätes symbolisiert, ob ein Wechsel des Ländercodes (MCC) oder des Netzcodes (MNC) stattgefunden hat. Wird die Frage positiv beantwortet, folgt die Abfrage, ob es sich hierbei um das Heimatnetz handelt. Dies wird mit Raute 12 dargestellt. Falls es sich um das Heimatnetz handelt, wird in Raute 14, falls es sich nicht um das Heimatnetz handelt, wird in Raute 16 abgezweigt. In Raute 14 findet die Abfrage statt, ob die vorliegenden Daten noch gültig sind. Bei gültigen Daten wird die Routine beendet. Dies wird mit Oval 18 dargestellt.

Sind die Daten ungültig, so verzweigt die Routine von Raute 14 in die Konfigurationsanfrage an das Netz nach dem aktuellen Länder- und Netzcode sowie Zugriffs-, Adreß- und Parameterdaten, Rechteck 20.

In Raute 16 wird festgestellt, ob der Roamingschalter aktiviert ist. Falls der Roamingschalter deaktiviert ist, wird dies auf einer Anzeige dargestellt, Rechteck 22. Anschließend wird die Routine beendet, Oval 24. Falls der Roamingschalter aktiviert ist, verzweigt die Routine von Raute 16 in Raute 26. Raute 26 symolisiert die Abfrage, ob ein Tabellensatz zum Länder- und zum Netzcode existiert. Falls kein solcher Tabellensatz existiert, verzweigt die Routine in die Abfrage, ob der Nutzer des Endgerätes in eine Aktualisierung eingewilligt hat, Raute 28. Sollte diese Abfrage ein negatives Ergebnis liefern, so wird dies auf der Anzeige angezeigt, Rechteck 30. Anschließend wird die Routine beendet, Oval 32.

Im Fall, daß der Nutzer in eine Aktualisierung der Daten eingewilligt hat, erfolgt die Konfigurationsanfrage an das Netz nach dem aktuellen Länder- und Netzcode, sowie Zugriffs-, Adreß- und Parameterdaten, Rechteck 29. Von da geht es zu Fortsetzungskreis 46. Von hier wird läuft das Flußdiagramm in Fig. 2 weiter.

Existiert ein Tabellensatz zum Länder- und Netzcode, so wird von Raute 26 in Raute 34 verzweigt, wo wiederum abgefragt wird, ob die vorliegenden Daten noch ihre Gültigkeit haben. Falls die Daten noch gültig sind, werden diese aus dem vorliegenden Tabellensatz herangezogen, Rechteck 36. Danach wird die Routine abgebrochen, Oval 38.

Sollten die Daten nicht mehr gültig sein, so wird von Raute 34 in Raute 40 verzweigt. In Raute 40 wird abgefragt, ob der Nutzer in eine Änderung eingewilligt hat. Sollte die Frage verneint werden, so erscheint auf einer Anzeige, daß das Roaming deaktiviert ist, Rechteck 42. Anschließend ist die Routine beendet, Oval 44.

Hat der Nutzer in eine Aktualisierung der Daten eingewilligt so verzweigt Raute 40 in das Rechteck 20. In Rechteck 20 erfolgt die Konfigurationsanfrage an das Netz nach dem aktuellen Länder- und Netzcode, sowie Zugriffs-, Adreß- und Parameterdaten. Von da wird in den Fortsetzungskreis 46 verzweigt.

In Fig. 2 startet die Routine mit Fortsetzungskreis 46. Von hier geht es in Raute 48, welche Abfrage symbolisiert wird, ob eine Datenaktualisierung erfolgte. Falls die Antwort negativ ausfällt, wird zum einen eine Fehlermeldung auf der Anzeige angezeigt und ein anderes Netz gesucht, Rechteck 50.

Falls eine Datenaktualisierung erfolgte, zweigt die Routine von Raute 48 in Route 52. Raute 52 symbolisiert die Anfrage, ob die Nachbarlanddaten für den angefragten Ländercode erhalten wurden. Wird die Frage Frage verneint, so wird von Raute 52 in Rechteck 54 verzweigt. Rechteck 54 symbolisiert die Anzeigenausgabe, daß in diesem Land kein Telematikdienst angeboten wird. Der Notruf kann nur über die fest im Gerät vorkonfigurierte Nummer erfolgen.

Wird die Frage, ob die Nachbarlanddaten für den angefragten Ländercode erhalten wurden, bejaht, springt die Routine von Raute 52 zu Rechteck 56. Mit Rechteck 56 wird symbolisiert, daß alle Daten in dem entsprechenden Tabellensatz gespeichert werden.

Anschließend wird überprüft, ob alle DES-Schlüssel vorhanden sind, Raute 58. Sollte die Überprüfung negativ sein, so verzweigt die Routine von Raute 58 in Rechteck 60. Rechteck 60 symbolisiert die Anfrage der Schlüssel. Dann wird geprüft, ob eine Schlüsselaktualisierung erfolgte, Raute 62. Hat eine Schlüsselaktualisierung stattgefunden, werden die aktuellen Schlüssel gespeichert, Rechteck 64. Dann erfolgt die Abwicklung der Dienste über den aktuellen Tabellensatz, Rechteck 66. Die Routine wird beendet Oval 68. Sollte die Überprüfung, ob eine Schlüsselaktualisierun stattgefunden hat, verneint werden, so wird direkt von Raute 62 in Rechteck 66 übergegangen, in dem die Abwicklung der Dienste über den aktuellen Tabellensatz erfolgt. Danach wird auch hier die Routine beendet, wie Oval 68 zeigt.

Wird bei der Abfrage in Raute 58 festgestellt, daß alle DES-Schlüssel vorhanden sind, wird sofort mit der Abwicklung der Dienste über den aktuellen Datensatz begonnen. Raute 58 verzweigt deswegen in diesem Fall direkt in das Rechteck 66. Anschließend ist die Routine beendet, Oval 68.

## Patentansprüche

1. Roamingverfahren zum Ermitteln von lokalen Datendiensten mit einem Funkendgerät, wie ein Mobilfunktelefon, in einem Funknetz, wobei nach der Initialisierung des Funkendgerätes eine Heimattabelle übermittelt wird, in der Adreß-, Parameter- und Zugriffsinformationen zum Erreichen von lokalen Datendiensten enthalten sind, welche durch das Funkendgerät in einem Tabellensatz gespeichert werden, *wobei eine als Zugriffstabelle ausgebildete* Gasttabelle übermittelt wird, in der Adreß-, Parameter- und Zugriffsinformationen zum Erreichen von lokalen Datendiensten enthalten sind, welche durch das Funkendgerät in Tabellensatz gespeichert wird, ***dadurch gekennzeichnet, dass** bei einem Wechsel des Netzes ein Zeitstempel in der Zugriffstabelle für das neue Netz geprüft wird, ob die im Tabellensatz enthaltenen Daten noch gültig sind, wobei eine Konfigurationsanfrage nach Zugriffsdaten für das aktuelle Netz ausgelöst wird, wenn die Daten nicht mehr gültig sind*.

2. Verfahren nach Anspruch 1, **dadurch gekennzeichnet, dass** ein Verschlüsselungsalgorithmus durch Heimat- oder Fremddatensender übermittelt wird, welcher durch das Funkendgerät gespeichert wird.

3. Verfahren nach einem der Ansprüche 1 oder 2, **dadurch gekennzeichnet, dass** eine Nachbarlandtabelle übermittelt und durch das Funkendgerät gespeichert wird.

4. Verfahren nach Anspruch 3, **dadurch gekennzeichnet, dass** die Nachbarlandtabelle veränderbar ist.

5. Verfahren nach einem der Ansprüche 1 bis 4, **dadurch gekennzeichnet, dass** Initiälisierungsadressen übermittelt und durch das Funkendgerät gespeichert werden.

## Claims

1. A roaming method for determining local data services by a radio terminal like a mobile phone in a radio network, wherein after initialising the radio terminal a home table is transmitted, which comprises address information, parameter information and access information for obtaining local data services and is stored in a table set by the radio terminal, wherein a visitor table adapted as access table is transmitted, which comprises address information, parameter information and access information for obtaining local data services and is stored in a table set by the radio terminal, **characterised in that** when changing the network a time stamp in the access table for the new network is checked if the data comprises by the table set is still valid and wherein a configuration request for access data of the current network is initiated if the data is not valid anymore.

2. A method according to claim 1, **characterised in that** an encryption algorithm is transferred by the home data transmitter or the foreign data transmitter and stored by the radio terminal.

3. A method according to any of claim 1 or 2, **characterised in that** a neighbouring country table is transferred and stored by the radio terminal.

4. A method according to claim 3, **characterised in that** the neighbouring country table is modifiable.

5. A method according to any of claim 1 to 4, **characterised in that** initialisation addresses are transferred and stored by the radio terminal.

## Revendications

1. Procédé d'itinérance destiné à détecter des services de télématique à l'aide d'un terminal de téléphonie mobile, tel un téléphone portable, dans un réseau de radiotéléphonie, après l'initialisation du terminal de radiotéléphonie mobile un tableau de localisation étant transmis, tableau comprenant des informations sur l'adresse, les paramètres et l'accès destinées à obtenir des services de télématique et mémorisées par le terminal de radiotéléphonie dans un tableautage, un tableau d'accueil configuré sous forme de tableau d'accès étant transmis, tableau comprenant des informations concernant l'adresse, les paramètres et l'accès destinées à obtenir des services de télématique et mémorisées par le terminal de radiotéléphonie dans un tableautage, **caractérisé en ce qu'**un horodatage contenu dans le tableau d'accès au nouveau réseau est vérifié lors du changement de réseau pour savoir si les données contenues dans le tableautage sont encore valables, une demande de configuration des données d'accès au réseau actuel étant déclenchée, une fois que les données ne sont plus valables.

2. Procédé selon la revendication 1, **caractérisé en ce qu'**un algorithme de codage mémorisé par le terminal de radiotéléphonie est transmis par l'émetteur de données locales ou étrangères.

3. Procédé selon l'une quelconque des revendications 1 ou 2, **caractérisé en ce qu'**un tableau du pays voisin est transmis et mémorisé par le terminal de radiotéléphonie.

4. Procédé selon la revendication 3, **caractérisé en ce que** le tableau du pays voisin est modifiable.

5. Procédé selon l'une quelconque des revendications 1 à 4, **caractérisé en ce que** des adresses d'initialisation sont transmises et mémorisées par le terminal de radiotéléphonie.
